# EUROPÄISCHE PATENTSCHRIFT

(11) **EP 4 323 296 B1**
(45) Veröffentlichungstag und Bekanntmachung des Hinweises auf die Patenterteilung: **14.05.2025**
(21) Anmeldenummer: 22719271.3
(22) Anmeldetag: 29.03.2022
(51) Int. Cl.: B65H 20/02, B65H 23/025, B65H 27/00

(54) **KALANDER-TRANSPORTROLLE SOWIE KALANDRIEREINRICHTUNG FÜR DIE HERSTELLUNG VON ELEKTRODEN FÜR EINE BATTERIEZELLE**
CALENDER TRANSPORT ROLLER AND CALENDERING DEVICE FOR THE PRODUCTION OF ELECTRODES FOR A BATTERY CELL
ROULEAU DE TRANSPORT DE CALANDRE ET DISPOSITIF DE CALANDRAGE POUR PRODUIRE DES ÉLECTRODES D'UN ÉLÉMENT DE BATTERIE

(30) Priorität: 12.04.2021 DE 102021109014
(43) Veröffentlichungstag der Anmeldung: 21.02.2024
(73) Patentinhaber: Bayerische Motoren Werke Aktiengesellschaft, 80809 München (DE)
(72) Erfinder: ZENSEN, Nina, 85276 Pfaffenhofen an der Ilm (DE); ROH, Hyunchul, 81927 München (DE); HAN, Wonsup, Suwon-si, Gyeonggi-do 16664 (KR)
(86) Internationale Anmeldenummer: PCT/EP2022/058291
(87) Internationale Veröffentlichungsnummer: WO 2022/218694

(56) Entgegenhaltungen:
- WO-A1-2020/143971
- JP-A- S 579 667
- US-A1- 2018 226 630

## Beschreibung

Die Erfindung betrifft eine Kalander-Transportrolle für eine Kalandriereinrichtung für die Herstellung von Elektroden für eine Batteriezelle, gemäß dem Anspruch 1.

Zur Fertigung von Elektroden für Batteriezellen, insbesondere Lithium-Ionen-Batteriezellen, werden flächige Leiterbänder in Form von dünner Kupferfolie für die Anode bzw. Aluminiumfolie für die Kathode bzw. entsprechende Metallnetze beidseitig mit einer Beschichtung aus einer Kompositmasse versehen, wobei die Ränder des Leiterbands unbeschichtet bleiben. Nach dem Auftragen des Komposits auf das metallische Leiterband und gegebenenfalls Entfernen des Trägerlösemittels wird das nun beidseitig beschichtete Elektrodenband, üblicherweise in einem Rolle-zu-Rolle-Prozess, einer Kalandriereinrichtung zugeführt, wo die Beschichtung durch ein oder mehrere Paare rotierender Kalandrierwalzen verdichtet wird, um die Porosität zu verringern bzw. einzustellen und die elektrische Leitfähigkeit und die Energiedichte zu erhöhen.

Hierbei ist es wünschenswert, das Elektrodenband dem zwischen den Kalandrierwalzen ausgebildeten Spalt möglichst flach, präzise und gleichmäßig zuzuführen bzw. nach den Kalandrierwalzen aus diesem heraus zu transportieren. Da das Elektrodenband auch auf der der Transportrolle zugewandten Seite abschnittsweise beschichtet ist, liegt es nicht über seine komplette Breite plan auf der Transportrolle auf. Es besteht ein Höhenunterschied zwischen dem beschichteten Abschnitt und den angrenzenden unbeschichteten Randabschnitten, der der Dicke der einseitigen Beschichtung von üblicherweise etwa 30 µm bis 100 µm (bei einer Gesamtdicke des Elektrodenbands von ungefähr 80 µm bis 200 µm) entspricht. Im Vergleich hierzu beträgt die Foliendicke des Leiterbands nur etwa 6 µm bis 25 µm.

Um die Bildung von Falten, Verwerfungen oder Rissen in den unbeschichteten Randbereichen zu vermeiden, ist es gängige Praxis, den Höhenunterschied zwischen beschichteten und unbeschichteten Abschnitten durch das manuelle Aufbringen von Klebeband auf die Kalander-Transportrolle auszugleichen. Hierbei muss das Klebeband sehr exakt aufgebracht werden und für jedes neue Elektrodenband, das verdichtet werden soll, wieder entfernt und neu aufgeklebt werden, um für unterschiedliche Beschichtungsbreiten und Beschichtungshöhen jeweils die geeignete Anpassung zu erreichen. Diese manuelle Anpassung ist sehr zeitaufwendig und nicht immer präzise.

In den Druckschriften WO2020/143971 A1 A1 und US 2018/226630 sind Kalandrierrollen beschrieben, die entlang der axialen Richtung verschiedene Umfänge aufweisen. Die Druckschrift JP S57 9667 beschreibt eine Führung für bandförmige Artikel mit einem mechanisch verstellbarem Radius.

Die Aufgabe der vorliegenden Erfindung besteht daher darin, eine Kalander-Transportrolle sowie eine Kalandriereinrichtung für die Herstellung von Elektroden bereitzustellen, mit der eine Verringerung der Vorbereitungszeit und eine Verbesserung der Genauigkeit und somit der Qualität der verdichteten Elektroden erreicht werden kann.

Gemäß einem ersten Aspekt der Erfindung ist hierzu eine Kalander-Transportrolle der eingangs genannten Art vorgesehen, wobei die Transportrolle in ihrem Kontaktbereich wenigstens einen Einstellabschnitt aufweist und eine Aufweiteinrichtung vorgesehen ist, die den Durchmesser der Transportrolle im Einstellabschnitt so verändert, dass ein Höhenunterschied zwischen einem beschichteten Abschnitt des Elektrodenbands und einem angrenzenden unbeschichteten Abschnitt des Elektrodenbands ausgeglichen ist.

Es ist zu beachten, dass unter Kontaktbereich der gesamte Bereich der Mantelfläche der Transportrolle zu verstehen ist, der vom Elektrodenband berührt wird bzw. auf dem das Elektrodenband aufliegt. Dieser erstreckt sich in Axialrichtung über einen Großteil der Breite der Transportrolle und kann insbesondere größer als der Einstellabschnitt sein. Die Kalander-Transportrolle dient rein dem Transport des Elektrodenbands zu oder von den Kalandrierwalzen und ist selbst keine Kalandrierwalze.

Bei der erfindungsgemäßen Transportrolle lässt sich also mittels der Aufweiteinrichtung der Durchmesser der Transportrolle im Einstellabschnitt insbesondere mechanisch (also nicht etwa durch thermische Ausdehnung oder dergleichen) gezielt verändern und auf einen gewünschten Wert einstellen. Dadurch wird unter Bildung eines Absatzes auf der Transportrolle ein Höhenunterschied zwischen einem beschichteten Abschnitt und einem benachbarten unbeschichteten Abschnitt des Elektrodenbands ausgeglichen, so dass eine flache Zufuhr des Elektrodenbands zu den Kalandrierwalzen sichergestellt ist, wodurch unerwünschte Spannungen sowie die Bildung von Falten, Rissen oder Verwerfungen des Leiterbands in den unbeschichteten Abschnitten des Elektrodenbands vermieden werden. Mit der erfindungsgemäßen Kalander-Transportrolle lässt sich also die Qualität der hergestellten Elektroden verbessern, die sich nach der Verdichtung auch einfacher zu Wickeln (Coils) aufrollen lassen. Darüber hinaus werden Folgeschritte wie das Zurechtschneiden der Wickel und insbesondere die Sauberkeit des Konturschnitts, der mechanisch oder durch Laser erfolgt, durch flache und faltenfreie unbeschichtete Bereiche maßgeblich erleichtert.

Im Vergleich zu einem Höhenausgleich mit einem für jedes Elektrodenband von neuem manuell auf die Transportrolle aufgebrachten Klebeband, wie es bislang üblich ist, bietet die erfindungsgemäße Lösung zudem den Vorteil einer kürzeren Vorbereitungszeit beim Einstellen der Kalandriereinrichtung auf ein neues Elektrodenband, und gleichzeitig werden Ungenauigkeiten durch das manuelle Aufkleben vermieden. Außerdem besteht nicht das Problem einer Verschmutzung der Transportrolle durch Klebebandrückstände, die nach dem Entfernen des Klebebands zurückbleiben können. Dabei lässt sich die erfindungsgemäße Kalander-Transportrolle auch in bestehenden Kalandriereinrichtungen einfach nachrüsten, indem lediglich die Transportrolle ausgetauscht wird, während die übrige Anlage unverändert bleibt.

Im Einstellabschnitt sind mehrere einzelne Segmente in Axialrichtung der Transportrolle nebeneinander angeordnet, die unabhängig vom jeweiligen Nachbarsegment in Radialrichtung der Transportrolle aufweitbar sind. Auf diese Weise lässt sich die Transportrolle besonders einfach an Elektrodenbänder mit unterschiedlich breiten beschichteten Abschnitten anpassen, indem so viele Segmente wie nötig auf den größeren Durchmesser aufgeweitet werden, um den bzw. die unbeschichteten Abschnitte des Elektrodenbands in seiner bzw. ihrer gesamten Breite vollständig zu unterstützen.

Die Segmente sind insbesondere als Ringe oder ringartig ausgeführt, wobei die Segmente geschlitzt oder in Umfangsrichtung in mehrere Ringabschnitte unterteilt sein können.

Weiterhin sind die Segmente bevorzugt aus Stahl, insbesondere Edelstahl, gefertigt, wodurch eine besonders hohe Präzision bei der Einstellung des gewünschten Durchmessers erreicht wird. Zusätzlich kann die Transportrolle radial außerhalb der Segmente mit einem festen Gummimaterial bespannt sein, das sich etwas dehnen lässt, um eine besonders einheitliche Oberfläche zu schaffen.

Eine besonders bedienfreundliche Ausgestaltung lässt sich erreichen, wenn ein motorisch betriebener Aufweitmechanismus vorgesehen ist, der jedes Segment elektrisch, hydraulisch oder mechanisch einzeln ansteuert.

Um die Transportrolle optimal an unterschiedliche Breiten des bzw. der beschichteten Abschnitte des jeweiligen Elektrodenbands anpassen zu können, beträgt vorteilhaft die Breite einiger oder aller Segmente in Axialrichtung der Transportrolle höchstens 2 mm. Insbesondere haben die Segmente eine Breite von nur etwa 1 mm.

In den axialen Randbereichen der Transportrolle bzw. des Kontaktbereichs, in denen gewöhnlich keine Beschichtung des Elektrodenbands vorliegt, können die Segmente entsprechend breiter ausgeführt sein.

Um eine besonders genaue Anpassung an unterschiedliche Höhen der Beschichtung zu erreichen, sind vorzugsweise die Segmente so ausgebildet, dass sich der Durchmesser der Transportrolle im Einstellabschnitt in Schritten anpassen lässt, die zwischen 10 µm und 30 µm liegen. Damit kann die Transportrolle also in Schritten von 5 µm bis 15 µm an unterschiedliche Beschichtungshöhen angepasst werden. Bei aufweitbaren Segmenten sind die Aufweitschritte entsprechend vorzugeben. Dabei kann es ausreichend sein, wenn diese feinen Abstufungen um einen mittleren Wert der Beschichtungshöhe herum möglich sind.

Gemäß einem dritten Aspekt der Erfindung ist eine Kalandriereinrichtung für die Herstellung von Elektroden für eine Batteriezelle, insbesondere für eine Lithium-Ionen-Batteriezelle, vorgesehen. Diese weist wenigstens ein Paar Kalandrierwalzen und wenigstens eine Kalander-Transportrolle auf, wie sie bisher beschrieben wurde. Dabei fördert die Transportrolle das Elektrodenband zu einem zwischen den Kalandrierwalzen ausgebildeten Spalt hin. Besonders bei dieser als Zufuhr zu den Kalandrierwalzen dienenden Transportrolle ist der präzise und faltenfreie Transport des Elektrodenbands entscheidend, um qualitativ hochwertige Elektroden zu erzielen. Die erfindungsgemäße Kalandriereinrichtung bietet also eine hohe Flexibilität und eine schnelle Anpassung an unterschiedliche Elektrodenbänder. Hinsichtlich der weiteren Vorteile wird an dieser Stelle auf die Ausführungen zu den Kalander-Transportrollen gemäß den unabhängigen Ansprüchen verwiesen.

In einer Weiterbildung ist bei der Kalandriereinrichtung eine zweite erfindungsgemäße Kalander-Transportrolle vorgesehen, die in einer Laufrichtung des Elektrodenbands unmittelbar nach dem Paar Kalandrierwalzen angeordnet ist. Auf diese Weise lässt sich die Qualität der produzierten Elektrode noch weiter verbessern, wobei natürlich der Durchmesser der zweiten Kalander-Transportrolle abschnittsweise auf den Höhenunterschied zwischen beschichteten und unbeschichteten Abschnitten des Elektrodenbands nach Verdichten der Beschichtung angepasst ist.

Weitere Merkmale und Vorteile ergeben sich aus der nachfolgenden Beschreibung mehrerer bevorzugter Ausführungsformen anhand der beigefügten Zeichnungen. In diesen zeigt:
- Figur 1 eine schematische Seitenansicht, teilweise geschnitten, einer Kalander-Transportrolle gemäß einer ersten Ausführungsform der Erfindung, die ein Elektrodenband transportiert;
- Figur 2 eine schematische Draufsicht auf die Kalander-Transportrolle aus Figur 1;
- Figur 3 eine schematische Seitenansicht, teilweise geschnitten, einer Kalander-Transportrolle gemäß einer zweiten Ausführungsform der Erfindung, die ein Elektrodenband transportiert;
- Figur 4 eine schematische Seitenansicht, teilweise geschnitten, einer Kalander-Transportrolle gemäß einer dritten Ausführungsform der Erfindung, die ein Elektrodenband transportiert;
- Figur 5 eine schematische Seitenansicht, teilweise geschnitten, einer nicht alle Merkmale der Erfindung aufweisenden Kalander- Transportrolle, die ein Elektrodenband transportiert;
- Figur 6 eine schematische Seitenansicht, teilweise geschnitten, einer Kalander-Transportrolle gemäß Figur 5, die ein Elektrodenband transportiert;
- Figur 7 eine schematische Seitenansicht, teilweise geschnitten, einer nicht alle Merkmale der Erfindung aufweisenden Kalander- Transportrolle, die ein Elektrodenband transportiert, gemäß ; und
- Figur 8 eine schematische Ansicht einer erfindungsgemäßen Kalandriereinrichtung.

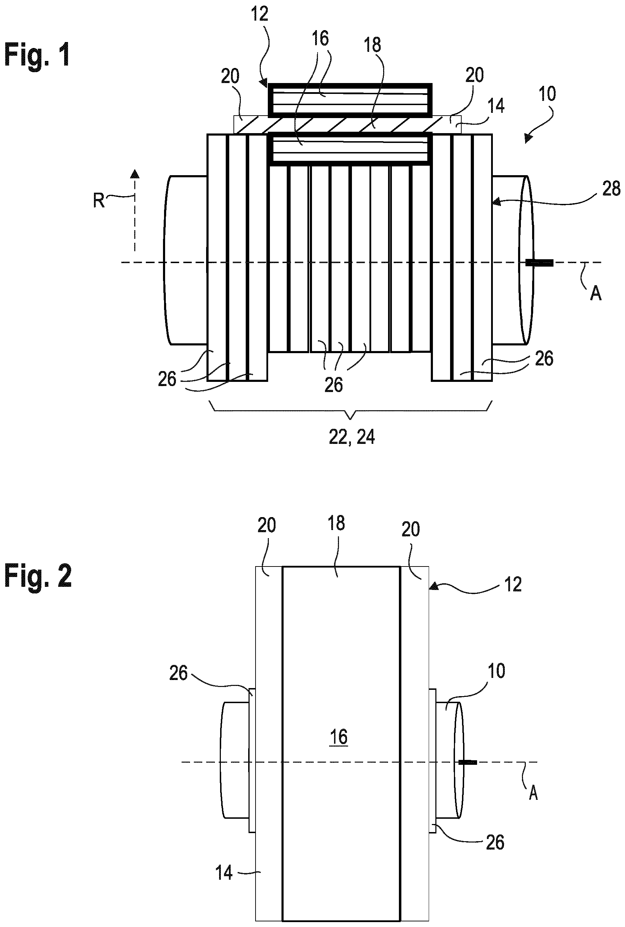

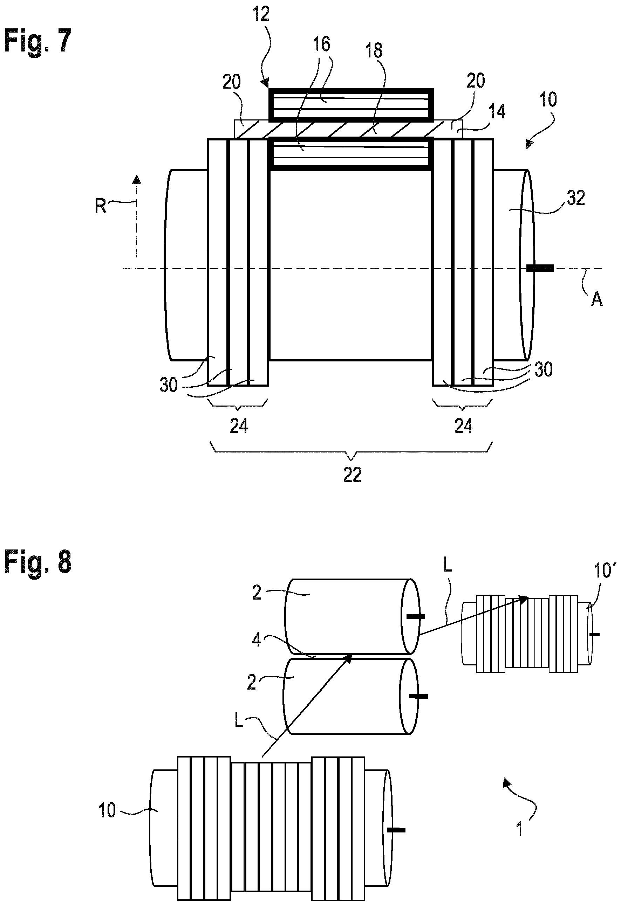

Die Figuren 1 und 2 zeigen eine Kalander-Transportrolle 10 gemäß einer ersten Ausführungsform der Erfindung, die in einer Kalandriereinrichtung 1 (siehe Figur 8) für die Herstellung von Elektroden für eine Batteriezelle, insbesondere eine Lithium-Ionen-Batteriezelle, verwendet wird. Die Transportrolle 10 dient der Förderung eines Elektrodenbands 12 zu bzw. von einem Paar Kalandrierwalzen 2. Das Elektrodenband 12 weist ein flächiges Leiterband 14 auf, bei dem es sich um eine von einer Rolle abgewickelte Metallfolie oder ein Metallnetz handelt. Zur Herstellung einer Kathode kommt Aluminiumfolie, zur Herstellung einer Anode Kupferfolie zum Einsatz. Die Foliendicken betragen zwischen 6 µm und 25 µm.

Das Leiterband 14 ist beidseitig abschnittsweise mit einer Beschichtung 16 aus Kompositmasse versehen, deren Dicke jeweils etwa 30 µm bis 100 µm beträgt. Bei der Beschichtung 16 handelt es sich um eine Suspension, die als Nassfilm aufgetragen und anschließend getrocknet wird. Alternativ ist eine Pressauftragung oder der Auftrag einer extrudierten zähflüssigen Masse in einem sogenannten lösemittelfreien "Trockenbeschichtungsprozess" bzw. Extrusionsprozess möglich. Die Breite der Beschichtung 16 beträgt etwa 70 mm bis 430 mm.

Durch die Beschichtung 16 ergibt sich auf der der Transportrolle 10 zugewandten Seite ein Höhenunterschied zwischen einem beschichteten Abschnitt 18 des Elektrodenbands 12 und zwei im Randbereich liegenden, angrenzenden unbeschichteten Abschnitten 20 des Elektrodenbands 12. Die Breite der unbeschichteten Ränder des Elektrodenbands 12 beträgt üblicherweise zwischen 0,5 cm und 10 cm, hier etwa 2 cm.

Es ist zu beachten, dass die Figuren lediglich der Veranschaulichung dienen und nicht maßstabsgetreu sind.

Um in den unbeschichteten Abschnitten 20 eine mechanische Verformung des empfindlichen Leiterbands 14 sowie die Bildung von Falten, Rissen und Verwerfungen zu verhindern, muss das Elektrodenband 12 einem zwischen den Kalandrierwalzen 2 ausgebildeten Spalt 4 (vgl. Figur 8) möglichst gleichmäßig zugeführt werden. Zu diesem Zweck weist die Transportrolle 10 in einem vom Elektrodenband 12 berührbaren Kontaktbereich 22 auf der Mantelfläche der Transportrolle 10 einen Einstellabschnitt 24 auf, der sich bei der Ausführungsform gemäß den Figuren 1 und 2 in Axialrichtung A der Transportrolle 10 über den gesamten Kontaktbereich 22 erstreckt.

Im Einstellabschnitt 24 sind in Axialrichtung A der Transportrolle 10 eine Vielzahl einzelner Segmente 26 nebeneinander angeordnet, die mithilfe einer radial innenliegenden Aufweiteinrichtung 28 in Radialrichtung R der Transportrolle 10 aufweitbar sind, indem die Aufweiteinrichtung 28 den Durchmesser der Transportrolle 10 im Einstellabschnitt 24 verändert, und zwar für jedes einzelne Segment 26 unabhängig vom jeweiligen Nachbarsegment.

Die Segmente 26 sind aus Edelstahl und insbesondere ringförmig ausgeführt, wobei die Ringe in Umfangsrichtung geschlitzt oder sogar in mehrere Ringabschnitte unterteilt sind. Radial außerhalb können die Segmente 26 zusätzlich mit einem festen Gummimaterial bespannt sein, das sich etwas dehnen lässt.

Die Aufweiteinrichtung 28 umfasst einen motorisch betriebenen Aufweitmechanismus, der jedes Segment 26 einzeln elektrisch, hydraulisch, pneumatisch oder mechanisch ansteuert. Da die Aufweitschritte vorzugsweise im Bereich von etwa 10 µm liegen, ist hier eine feinmechanische Ansteuerung vonnöten.

Durch die abschnittsweise Aufweitung des Einstellabschnitts 24 bzw. einzelner Segmente 26 wird die Transportrolle 10 so auf das jeweils zu transportierende Elektrodenband 12 eingestellt, dass der Höhenunterschied zwischen dem beschichteten Abschnitt 18 des Elektrodenbands 12 und den beiden angrenzenden unbeschichteten Abschnitten 20 ausgeglichen ist.

Die Breite jedes Segments 26 in Axialrichtung A der Transportrolle 10 beträgt vorzugsweise nur wenige Millimeter, insbesondere in den Übergangsbereichen zwischen dem beschichteten Abschnitt 18 und den unbeschichteten Abschnitten 20. Im mittleren Bereich, in dem die durchgehende Beschichtung 16 vorliegt, können die Segmente 26 entsprechend breiter ausgeführt sein, ebenso an den radial äußeren Rändern des Einstellabschnitts 24.

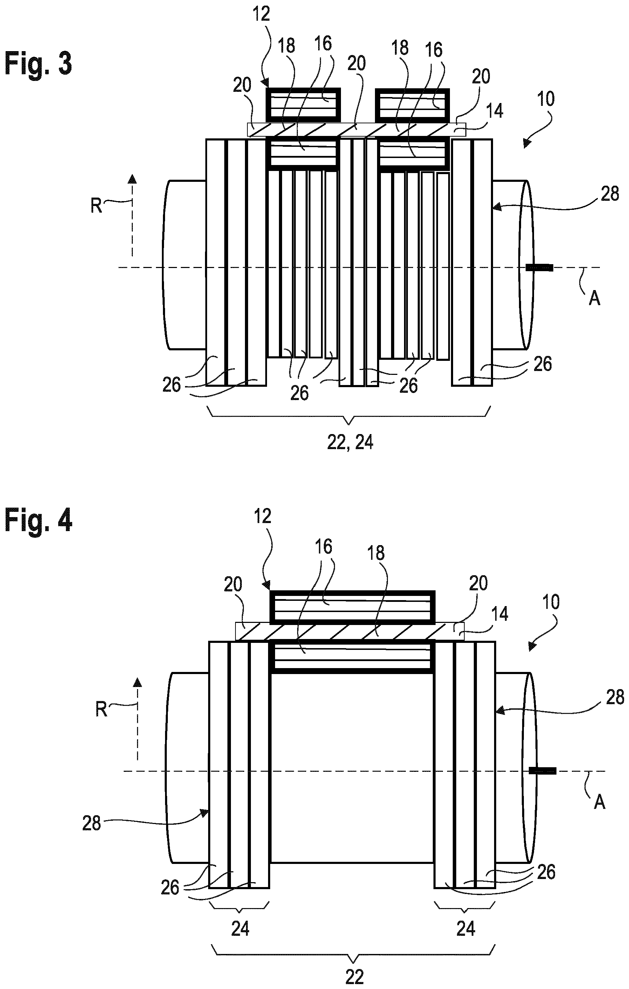

Figur 3 zeigt eine zweite Ausführungsform der Kalander-Transportrolle 10, wobei im Folgenden gleiche Bauteile gleiche Bezugszeichen tragen und lediglich auf die Unterschiede zur bisher beschriebenen Ausführungsform eingegangen wird.

Die Transportrolle 10 gemäß Figur 3 unterscheidet sich von derjenigen der Figur 1 lediglich darin, dass die einzelnen Segmente 26 in einem mittleren Bereich des Einstellabschnitts 24 in Axialrichtung A schmaler ausgebildet sind, während im Randbereich etwas breitere Segmente 26 vorliegen.

Zudem weist das Elektrodenband 12 bei der gezeigten Ausgestaltung zwei beschichtete Abschnitte 18 auf, zwischen denen ein weiterer unbeschichteter Abschnitt 20 des Elektrodenbands 12 vorgesehen ist. Um auch in diesem Bereich die Bildung von Falten und dergleichen zu vermeiden, sind auch hier die Segmente 26 aufgeweitet, so dass der Höhenunterschied zwischen den beschichteten Abschnitten 18 und dem dazwischenliegenden unbeschichteten Abschnitt 20 ausgeglichen ist.

Wie aus Figur 3 ersichtlich ist, ist die Breite des unbeschichteten Abschnitts 20, der zwischen den beschichteten Abschnitten 18 liegt, in etwa doppelt so groß wie die Breite der unbeschichteten Abschnitte 20 an den beiden Rändern des Elektrodenbands 12.

In Figur 4 ist eine dritte Ausführungsform der Kalander-Transportrolle 10 dargestellt, bei der sich der Einstellabschnitt 24 nicht über den gesamten Kontaktbereich 22 erstreckt, sondern in Axialrichtung A der Transportrolle 10 zwei Einstellabschnitte 24 vorgesehen sind, die jeweils nahe einem axialen Ende der Transportrolle 10 angeordnet sind. Zwischen den Einstellabschnitten 24 ist der Durchmesser der Transportrolle 10 unveränderlich, wodurch die minimale Breite, die die Beschichtung 16 haben darf, vorgegeben ist.

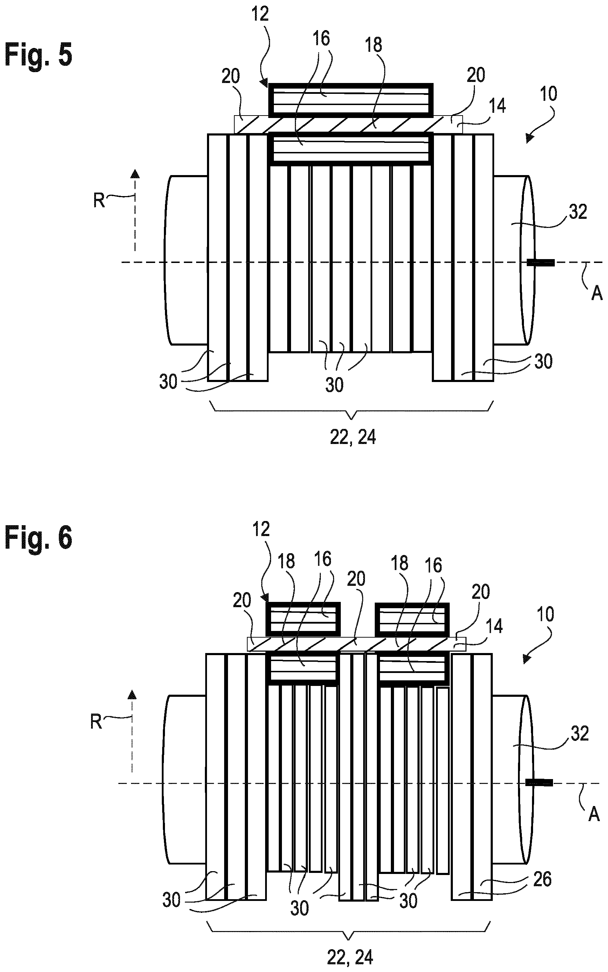

Figur 5 zeigt eine nicht alle Merkmale der Erfindung aufweisende Kalander-Transportrolle 10, wobei auch hier lediglich auf die Unterschiede zu den bisher beschriebenen Ausführungsformen eingegangen wird. Die Kalander-Transportrolle 10 gemäß Figur 5 weist einen Einstellabschnitt 24 auf, der sich in Axialrichtung A der Transportrolle über deren gesamten Kontaktbereich 22 erstreckt.

Jedoch sind hier im Einstellabschnitt 24 nicht einzelne aufweitbare Segmente vorgesehen, sondern mehrere vorgefertigte Einstellringe 30, mit denen sich der Durchmesser der Transportrolle 10 so verändern lässt, dass der Höhenunterschied zwischen dem beschichteten Abschnitt 18 des Elektrodenbands 12 und den unbeschichteten Abschnitten 20 ausgeglichen ist.

Der Einstellabschnitt 24 weist eine Vielzahl von Einstellringen 30 auf, die in Axialrichtung A der Transportrolle 10 nebeneinander angeordnet sind.

Die Einstellringe 30 sind umfangsmäßig geschlossen und aus Stahl, insbesondere Edelstahl, gefertigt. Die Einstellringe 30 sind auf einem starr ausgebildeten Rollenkörper 32 der Transportrolle 10 angeordnet, insbesondere seitlich aufgeschoben.

Dabei haben die Einstellringe 30, die in den unbeschichteten Abschnitten 20 das Elektrodenband 12 bzw. das Leiterband 14 berühren, eine größere radiale Dicke als die Einstellringe 30, die den beschichteten Abschnitt 18 des Elektrodenbands 12 unterstützen.

Zur Anpassung der Transportrolle 10 an das jeweilige Elektrodenband 12 werden aus einer Vielzahl von Einstellringen 30, die unterschiedliche radiale Dicken aufweisen, die jeweils passenden Einstellringe 30 ausgewählt, die optimal auf das jeweils zu transportierende Elektrodenband 12 abgestimmt sind. Hierzu ist ein ganzer Satz von Einstellringen 30 vorhanden, deren radiale Dicken etwa in 10 µm Abschnitten gestuft sind, wobei die jeweils passenden zur vorliegenden Beschichtung 16 ausgewählt werden. Der Rollenkörper 32 hat einen einheitlichen Durchmesser, auf den im gesamten Kontaktbereich 22 Einstellringe 30 aufgeschoben sind.

Auch hier liegt die Breite jedes Einstellrings 30 in Axialrichtung A der Transportrolle 10 im Bereich weniger Millimeter, wodurch eine möglichst genaue Anpassung an die Breite der Beschichtung 16 möglich ist.

Figur 6 zeigt eine nicht alle Merkmale der Erfindung aufweisende Kalander-Transportrolle 10, bei der die Anpassung an den Höhenunterschied zwischen den beschichteten Abschnitten 18 und den angrenzenden unbeschichteten Abschnitten 20 des Elektrodenbands 12 durch mehrere im Einstellabschnitt 24 angeordnete Einstellringe 30 erfolgt. Ähnlich wie die Ausführungsform gemäß Figur 3 weist auch hier das Elektrodenband 12 zwei beschichtete Abschnitte 18 auf, zwischen denen wieder ein unbeschichteter Abschnitt 20 vorgesehen ist. Es fällt auf, dass sie Einstellringe 30 hier in ihrer axialen Breite etwas schmaler ausgeführt sind als bei der Ausgestaltung gemäß Figur 5, zumindest in einem mittleren Bereich des Einstellabschnitts 24.

Eine Kalander-Transportrolle 10 gemäß einem weiteren Beispiel. da nicht alle Merkmale der Erfindung aufweist, ist in Figur 7 gezeigt. Auch hier werden die Höhenunterschiede zwischen dem beschichteten Abschnitt 18 und den unbeschichteten Abschnitten 20 durch Einstellringe 30 ausgeglichen. Dabei sind, ähnlich wie bei der Ausführungsform gemäß Figur 4, zwei Einstellabschnitte 24 vorgesehen, die nahe der axialen Enden der Transportrolle 10 angeordnet sind. In einem mittleren Teil des Kontaktbereichs 22, in dem der beschichtete Abschnitt 18 des Elektrodenbands 12 angeordnet ist, dient der Rollenkörper 32 direkt als Kontaktfläche für das Elektrodenband 12 bzw. die Beschichtung 16.

Bei der gezeigten Ausführungsform hat der Rollenkörper 32 einen einheitlichen Durchmesser; alternativ wäre es jedoch auch denkbar, dass der mittlere Teil des Rollenkörpers 32, der die Beschichtung 16 unmittelbar berührt, einen größeren Durchmesser aufweist und im Bereich der Einstellabschnitte 24 der Rollenkörper 32 einen geringeren Durchmesser hat. Eine solche Ausgestaltung bietet den Vorteil, dass die Einstellringe 30 in Radialrichtung R dicker ausgebildet werden können, was technisch einfacher umsetzbar ist.

Figur 8 schließlich zeigt eine erfindungsgemäße Kalandriereinrichtung 1 für die Herstellung von Elektroden, die ein Paar Kalandrierwalzen 2 sowie zwei Transportrollen 10, 10' aufweist, wobei die Transportrolle 10 das Elektrodenband 12 zu dem zwischen den Kalandrierwalzen 2 ausgebildeten Spalt 4 hin fördert.

Zwischen den Kalandrierwalzen 2 wird die Beschichtung 16 verdichtet, um ihre Porosität zu verringern, wodurch sich eine verbesserte Struktur der Oberfläche sowie eine verbesserte Leitfähigkeit und eine höhere Energiedichte erreichen lassen.

Die zweite Transportrolle 10' ist in Laufrichtung L des Elektrodenbands 12 nach den Kalandrierwalzen 2 angeordnet und transportiert das fertig verdichtete Elektrodenband 12 weiter zu einer Aufrolleinrichtung, in der das beschichtete und verdichtete Elektrodenband 12 zu einem Wickel aufgerollt wird (in der Figur nicht gezeigt).

Die Transportrolle 10 gemäß Figur 3 unterscheidet sich von derjenigen der Figur 1 lediglich darin, dass die einzelnen Segmente 26 in einem mittleren Bereich des Einstellabschnitts 24 in Axialrichtung A schmaler ausgebildet sind, während im Randbereich etwas breitere Segmente 26 vorliegen.

Zudem weist das Elektrodenband 12 bei der gezeigten Ausgestaltung zwei beschichtete Abschnitte 18 auf, zwischen denen ein weiterer unbeschichteter Abschnitt 20 des Elektrodenbands 12 vorgesehen ist. Um auch in diesem Bereich die Bildung von Falten und dergleichen zu vermeiden, sind auch hier die Segmente 26 aufgeweitet, so dass der Höhenunterschied zwischen den beschichteten Abschnitten 18 und dem dazwischenliegenden unbeschichteten Abschnitt 20 ausgeglichen ist.

Wie aus Figur 3 ersichtlich ist, ist die Breite des unbeschichteten Abschnitts 20, der zwischen den beschichteten Abschnitten 18 liegt, in etwa doppelt so groß wie die Breite der unbeschichteten Abschnitte 20 an den beiden Rändern des Elektrodenbands 12.

In Figur 4 ist eine dritte Ausführungsform der Kalander-Transportrolle 10 dargestellt, bei der sich der Einstellabschnitt 24 nicht über den gesamten Kontaktbereich 22 erstreckt, sondern in Axialrichtung A der Transportrolle 10 zwei Einstellabschnitte 24 vorgesehen sind, die jeweils nahe einem axialen Ende der Transportrolle 10 angeordnet sind. Zwischen den Einstellabschnitten 24 ist der Durchmesser der Transportrolle 10 unveränderlich, wodurch die minimale Breite, die die Beschichtung 16 haben darf, vorgegeben ist.

Figur 5 zeigt eine vierte Ausführungsform einer erfindungsgemäßen Kalander-Transportrolle 10, wobei auch hier lediglich auf die Unterschiede zu den bisher beschriebenen Ausführungsformen eingegangen wird. Die Kalander-Transportrolle 10 gemäß Figur 5 weist einen Einstellabschnitt 24 auf, der sich in Axialrichtung A der Transportrolle über deren gesamten Kontaktbereich 22 erstreckt.

Jedoch sind hier im Einstellabschnitt 24 nicht einzelne aufweitbare Segmente vorgesehen, sondern mehrere vorgefertigte Einstellringe 30, mit denen sich der Durchmesser der Transportrolle 10 so verändern lässt, dass der Höhenunterschied zwischen dem beschichteten Abschnitt 18 des Elektrodenbands 12 und den unbeschichteten Abschnitten 20 ausgeglichen ist.

Der Einstellabschnitt 24 weist eine Vielzahl von Einstellringen 30 auf, die in Axialrichtung A der Transportrolle 10 nebeneinander angeordnet sind.

Die Einstellringe 30 sind umfangsmäßig geschlossen und aus Stahl, insbesondere Edelstahl, gefertigt. Die Einstellringe 30 sind auf einem starr ausgebildeten Rollenkörper 32 der Transportrolle 10 angeordnet, insbesondere seitlich aufgeschoben.

Dabei haben die Einstellringe 30, die in den unbeschichteten Abschnitten 20 das Elektrodenband 12 bzw. das Leiterband 14 berühren, eine größere radiale Dicke als die Einstellringe 30, die den beschichteten Abschnitt 18 des Elektrodenbands 12 unterstützen.

Zur Anpassung der Transportrolle 10 an das jeweilige Elektrodenband 12 werden aus einer Vielzahl von Einstellringen 30, die unterschiedliche radiale Dicken aufweisen, die jeweils passenden Einstellringe 30 ausgewählt, die optimal auf das jeweils zu transportierende Elektrodenband 12 abgestimmt sind. Hierzu ist ein ganzer Satz von Einstellringen 30 vorhanden, deren radiale Dicken etwa in 10 µm Abschnitten gestuft sind, wobei die jeweils passenden zur vorliegenden Beschichtung 16 ausgewählt werden. Der Rollenkörper 32 hat einen einheitlichen Durchmesser, auf den im gesamten Kontaktbereich 22 Einstellringe 30 aufgeschoben sind.

Auch hier liegt die Breite jedes Einstellrings 30 in Axialrichtung A der Transportrolle 10 im Bereich weniger Millimeter, wodurch eine möglichst genaue Anpassung an die Breite der Beschichtung 16 möglich ist.

Figur 6 zeigt eine Kalander-Transportrolle 10 gemäß einer fünften Ausführungsform der Erfindung, bei der die Anpassung an den Höhenunterschied zwischen den beschichteten Abschnitten 18 und den angrenzenden unbeschichteten Abschnitten 20 des Elektrodenbands 12 durch mehrere im Einstellabschnitt 24 angeordnete Einstellringe 30 erfolgt. Ähnlich wie die Ausführungsform gemäß Figur 3 weist auch hier das Elektrodenband 12 zwei beschichtete Abschnitte 18 auf, zwischen denen wieder ein unbeschichteter Abschnitt 20 vorgesehen ist. Es fällt auf, dass sie Einstellringe 30 hier in ihrer axialen Breite etwas schmaler ausgeführt sind als bei der Ausgestaltung gemäß Figur 5, zumindest in einem mittleren Bereich des Einstellabschnitts 24.

Eine Kalander-Transportrolle 10 gemäß einer sechsten Ausführungsform der Erfindung ist in Figur 7 gezeigt. Auch hier werden die Höhenunterschiede zwischen dem beschichteten Abschnitt 18 und den unbeschichteten Abschnitten 20 durch Einstellringe 30 ausgeglichen. Dabei sind, ähnlich wie bei der Ausführungsform gemäß Figur 4, zwei Einstellabschnitte 24 vorgesehen, die nahe der axialen Enden der Transportrolle 10 angeordnet sind. In einem mittleren Teil des Kontaktbereichs 22, in dem der beschichtete Abschnitt 18 des Elektrodenbands 12 angeordnet ist, dient der Rollenkörper 32 direkt als Kontaktfläche für das Elektrodenband 12 bzw. die Beschichtung 16.

Bei der gezeigten Ausführungsform hat der Rollenkörper 32 einen einheitlichen Durchmesser; alternativ wäre es jedoch auch denkbar, dass der mittlere Teil des Rollenkörpers 32, der die Beschichtung 16 unmittelbar berührt, einen größeren Durchmesser aufweist und im Bereich der Einstellabschnitte 24 der Rollenkörper 32 einen geringeren Durchmesser hat. Eine solche Ausgestaltung bietet den Vorteil, dass die Einstellringe 30 in Radialrichtung R dicker ausgebildet werden können, was technisch einfacher umsetzbar ist.

Figur 8 schließlich zeigt eine erfindungsgemäße Kalandriereinrichtung 1 für die Herstellung von Elektroden, die ein Paar Kalandrierwalzen 2 sowie zwei Transportrollen 10, 10' aufweist, wobei die Transportrolle 10 das Elektrodenband 12 zu dem zwischen den Kalandrierwalzen 2 ausgebildeten Spalt 4 hin fördert.

Zwischen den Kalandrierwalzen 2 wird die Beschichtung 16 verdichtet, um ihre Porosität zu verringern, wodurch sich eine verbesserte Struktur der Oberfläche sowie eine verbesserte Leitfähigkeit und eine höhere Energiedichte erreichen lassen.

Die zweite Transportrolle 10' ist in Laufrichtung L des Elektrodenbands 12 nach den Kalandrierwalzen 2 angeordnet und transportiert das fertig verdichtete Elektrodenband 12 weiter zu einer Aufrolleinrichtung, in der das beschichtete und verdichtete Elektrodenband 12 zu einem Wickel aufgerollt wird (in der Figur nicht gezeigt).

## Patentansprüche

1. Kalander-Transportrolle für eine Kalandriereinrichtung (1) für die Herstellung von Elektroden für eine Batteriezelle, insbesondere für eine Lithium-Ionen-Batteriezelle, die der Förderung eines Elektrodenbands (12) zu oder von einem Paar Kalandrierwalzen (2) dient, wobei das Elektrodenband (12) ein flächiges Leiterband (14) sowie eine zumindest auf der der Transportrolle (10) zugewandten Seite darauf abschnittsweise aufgebrachte Beschichtung (16) aufweist, wobei die Transportrolle (10) einen Kontaktbereich (22) auf ihrer Mantelfläche hat, der von dem Elektrodenband (12) berührbar ist,
wobei die Transportrolle (10) in ihrem Kontaktbereich (22) wenigstens einen Einstellabschnitt (24) aufweist und dass eine Aufweiteinrichtung (28) vorgesehen ist, die den Durchmesser der Transportrolle (10) im Einstellabschnitt (24) verändert, um einen Höhenunterschied zwischen einem beschichteten Abschnitt (18) des Elektrodenbands (12) und einem angrenzenden unbeschichteten Abschnitt (20) des Elektrodenbands (12) auszugleichen, und **dadurch gekennzeichnet, dass** im Einstellabschnitt (24) mehrere einzelne Segmente (26) in Axialrichtung (A) der Transportrolle (10) nebeneinander angeordnet sind, die unabhängig vom jeweiligen Nachbarsegment in Radialrichtung (R) der Transportrolle (10) aufweitbar sind.

2. Kalander-Transportrolle nach Anspruch 1, **dadurch gekennzeichnet, dass** ein motorisch betriebener Aufweitmechanismus vorgesehen ist, der die Segmente (26) elektrisch, hydraulisch oder mechanisch einzeln ansteuert.

3. Kalander-Transportrolle nach Anspruch 1 oder 2, **dadurch gekennzeichnet, dass** mehrere der Segmente (26) oder alle Segmente (26) in Axialrichtung (A) der Transportrolle (10) eine Breite von höchstens 2 mm aufweisen.

4. Kalander-Transportrolle nach einem der vorhergehenden Ansprüche, **dadurch gekennzeichnet, dass** sich der Einstellabschnitt (24) in Axialrichtung (A) der Transportrolle (10) über deren gesamten Kontaktbereich (22) erstreckt.

5. Kalander-Transportrolle nach einem der Ansprüche 1 bis 4, **dadurch gekennzeichnet, dass** in Axialrichtung (A) der Transportrolle (10) mehrere Einstellabschnitte (24) vorgesehen sind, insbesondere wenigstens zwei Einstellabschnitte (24), die nahe der axialen Enden der Transportrolle (10) angeordnet sind.

6. Kalandriereinrichtung für die Herstellung von Elektroden für eine Batteriezelle, insbesondere für eine Lithium-Ionen-Batteriezelle, mit wenigstens einem Paar Kalandrierwalzen (2) und wenigstens einer Transportrolle (10) gemäß einem der vorhergehenden Ansprüche, **dadurch gekennzeichnet, dass** die Transportrolle (10) das Elektrodenband (12) zu einem zwischen den Kalandrierwalzen (2) ausgebildeten Spalt (4) hin fördert.

7. Kalandriereinrichtung nach Anspruch 6, **dadurch gekennzeichnet, dass** eine zweite Transportrolle (10') gemäß einem der Ansprüche 1 bis 5 vorgesehen ist, die in einer Laufrichtung (L) des Elektrodenbands (12) unmittelbar nach dem Paar Kalandrierwalzen (2) angeordnet ist.

## Claims

1. Calender transport roller for a calendering device (1) for the production of electrodes for a battery cell, in particular for a lithium-ion battery cell, which serves to convey an electrode strip (12) to or from a pair of calendering rollers (2), wherein the electrode strip (12) has a flat conductor strip (14) and a coating (16) applied in sections on at least the side facing the transport roller (10), wherein the transport roller (10) has a contact area (22) on its outer surface, which can be touched by the electrode strip (12),
wherein the transport roller (10) in its contact area (22) has at least one adjustment section (24), and wherein a widening device (28) is provided which changes the diameter of the transport roller (10) in the adjustment section (24), in order to compensate for a height difference between a coated portion (18) of the electrode strip (12) and an adjacent uncoated portion (20) of the electrode strip (12), and **characterized in that**, in the adjustment section (24), a plurality of individual segments (26) are arranged next to one another in the axial direction (A) of the transport roller (10), which segments can be widened in the radial direction (R) of the transport roller (10) independently of the respective adjacent segment.

2. Calender transport roller according to Claim 1, **characterized in that** a motorized widening mechanism is provided which individually actuates the segments (26) electrically, hydraulically or mechanically.

3. Calender transport roller according to Claim 1 or **2, characterized in that** a plurality of the segments (26) or all the segments (26) have a width of at most 2 mm in the axial direction (A) of the transport roller (10).

4. Calender transport roller according to one of the preceding claims, **characterized in that** the adjustment section (24) extends in the axial direction (A) of the transport roller (10) over its entire contact area (22).

5. Calender transport roller according to one of Claims 1 to 4, **characterized in that** a plurality of adjustment sections (24) are provided in the axial direction (A) of the transport roller (10), in particular at least two adjustment sections (24) which are arranged near the axial ends of the transport roller (10).

6. Calendering device for the production of electrodes for a battery cell, in particular for a lithium-ion battery cell, with at least one pair of calendering rollers (2) and at least one transport roller (10) according to one of the preceding claims, **characterized in that** the transport roller (10) transports the electrode strip (12) to a gap (4) formed between the calendering rollers (2).

7. Calendering device according to Claim 6, **characterized in that** a second transport roller (10') according to one of Claims 1 to 5 is provided, which is arranged immediately downstream of the pair of calendering rollers (2) in a running direction (L) of the electrode strip (12).

## Revendications

1. Rouleau de transport pour calandre d'un dispositif de calandrage (1) destiné à la fabrication d'électrodes pour une cellule de batterie, en particulier pour une cellule de batterie lithium-ion, qui sert à transporter une bande d'électrodes (12) vers ou depuis une paire de rouleaux de calandrage (2), la bande d'électrode (12) présentant une bande conductrice plane (14) ainsi qu'un revêtement (16) appliqué par sections au moins sur le côté tourné vers le rouleau de transport (10), le rouleau de transport (10) ayant sur sa surface latérale une zone de contact (22) qui est apte à être touchée par la bande d'électrode (12),
le rouleau de transport (10) présentant au moins une section de réglage (24) dans sa zone de contact (22), et un dispositif d'élargissement (28) étant prévu pour modifier le diamètre du rouleau de transport (10) dans la section de réglage (24) afin de compenser une différence de hauteur entre une section revêtue (18) de la bande d'électrode (12) et une section adjacente non revêtue (20) de la bande d'électrode (12), et **caractérisé en ce que** dans la section de réglage (24), plusieurs segments individuels (26) sont agencés les uns à côté des autres dans la direction axiale (A) du rouleau de transport (10), lesquels segments sont aptes à être élargis dans la direction radiale (R) du rouleau de transport (10) indépendamment du segment adjacent respectif.

2. Rouleau de transport pour calandre selon la revendication 1, **caractérisé en ce qu'**il est prévu un mécanisme d'élargissement motorisé qui commande individuellement les segments (26) par voie électrique, hydraulique ou mécanique.

3. Rouleau de transport pour calandre selon la revendication 1 ou la revendication 2, **caractérisé en ce que** plusieurs des segments (26), ou tous les segments (26), présentent une largeur d'au plus 2mm dans la direction axiale (A) du rouleau de transport (10).

4. Rouleau de transport pour calandre selon l'une des revendications précédentes, **caractérisé en ce que** la partie de réglage (24) s'étend dans la direction axiale (A) du rouleau de transport (10) sur toute sa zone de contact (22).

5. Rouleau de transport pour calandre selon l'une des revendications 1 à 4, **caractérisé en ce que** plusieurs sections de réglage (24) sont prévues dans la direction axiale (A) du rouleau de transport (10), en particulier au moins deux sections de réglage (24) qui sont agencées à proximité des extrémités axiales du rouleau de transport (10).

6. Dispositif de calandrage pour la fabrication d'électrodes pour une cellule de batterie, en particulier pour une cellule de batterie lithium-ion, avec au moins une paire de rouleaux de calandrage (2) et au moins un rouleau de transport (10) selon l'une des revendications précédentes, **caractérisé en ce que** le rouleau de transport (10) achemine la bande d'électrode (12) vers une fente (4) formée entre les rouleaux de calandrage (2).

7. Dispositif de calandrage selon la revendication 6, **caractérisé en ce qu'**un deuxième rouleau de transport (10') est prévu selon l'une des revendications 1 à 5, lequel est agencé dans un sens de déplacement (L) de la bande d'électrodes (12) immédiatement après la paire de rouleaux de calandrage (2).
